Europäisches Patentamt

European Patent Office

Office européen des brevets

(11) Publication number: 0 395 021 A2

# (12) EUROPEAN PATENT APPLICATION

(21) Application number: 90107875.8

(51) Int. Cl.5: G06K 15/02, B41B 19/01

(22) Date of filing: 25.04.90

(30) Priority: 26.04.89 US 343913

(43) Date of publication of application:
31.10.90 Bulletin 90/44

(84) Designated Contracting States:
DE FR GB

(71) Applicant: EASTMAN KODAK COMPANY
343 State Street
Rochester, New York 14650(US)

(72) Inventor: Khan, Malik M.A.
387 Liberty Square Road
Boxboro, Massachusetts 01719(US)

(74) Representative: Endlich, Fritz, Dipl.-Phys.
Postfach 1326 Blumenstrasse 8
D-8034 Germering(DE)

(54) Method and system for encoding character fonts.

(57) A method for efficiently encoding character contours comprising decomposition of a character's pictographic representation into primitive geometric elements. The character is first divided into vertical or horizontal segments, which are themselves subdivided into smaller four-sided shapes. These shapes can take the form of trapezoidal or "curvezoidal" elements. In the latter case, the non-parallel sides of the elements are curvilinear segments rather than straight-line segments. The invention accommodates different fonts, point sizes and resolution requirements. Characters may be retrieved in real time for interactive WYSIWYG screen displays, or off-line for typesetting of high resolution text in a raster image processor; the representations contain sufficient information to drive screen displays and/or printer devices.

FIG. 1

EP 0 395 021 A2

# METHOD AND SYSTEM FOR ENCODING CHARACTER FONTS

## I. Background Of The Invention

### A. Field Of The Invention

The invention relates to a method of representing and storing character font patterns, for subsequent generation at any resolution and at any point size.

### B. Prior Art

The need for accurate and efficient reproduction of character images in modern WYSIWYG text processing and typesetting systems imposes considerable computational demands on the resources of such systems, particularly where high resolution and/or "real-time" performance is required. Typical printing or publishing applications require convenient access to multiple fonts of varying type sizes and orientations. Characters must also be easily transformed in two dimensions (e.g. scaled and/or rotated) and displayed in response to keyboard operator selection. Such features not only place great demands on the graphic processing capabilities of the system, but typically require huge amounts of storage as well. Because point-by-point (bitmap) representation of characters would quickly exhaust storage resources in all but the simplest applications, various approaches to efficient font representation and storage have been employed.

These approaches generally consist of initial identification of the basic information-carrying components of a character's pictographic representation, followed by application of some strategy for encoding these components using minimum memory space. Because any such method of representation can only approximate the true character image, some loss of fidelity is to be expected. Moreover, a tradeoff is often encountered between representational accuracy and the speed with which the stored character may be decoded, or translated into display information.

As an example of such an approach, certain mathematical constructs known as spline functions have been employed to approximate character contours. A spline function of order 'm' is a composite piecewise function comprising a number of individual polynomials of degree 'm-1', representing different segments of a curve. The join between two successive segments is such that the first 'm-2' derivatives of the polynomials representing those segments are continuous at the join. Practical implementations of this approach use cubic. quadratic, and linear polynomials to represent the composite piecewise functions; these are more commonly known as bezier outline, vector-arc outline, and vector outline representations. Although spline functions are capable of representing contours with good fidelity, they are mathematically complex and therefore difficult to implement and decode in real-time applications.

Another method of representation. described in U.S. Patent No. 4,615,012, applies to skeletal fonts useful for pen plotters and printers. It encodes a character as a sequence of vector units, each of which specifies position and the direction to the next unit. Although this method is easily implemented and the data is quickly decodable, curvilinear shapes can only be represented approximately. The utility of this method is basically limited to pen plotters and vector displays.

U.S. Patent No. 4,675,833 discloses a method of representation that consists of dividing a character into a series of vertically adjacent segments. These segments are identified in system memory by the left and right end joints of the horizontal top and bottom boundaries and by midpoints between the top and bottom end points. When the character is rendered, the left and right boundaries of each segment are approximated by fitting arc sections to the top and bottom end points and their associated midpoint.

## II. Description Of The Invention

### A. Objects Of The Invention

Accordingly, it is an object of the present invention to provide an improved method for representing characters that is accurate, easily decoded and that requires a minimum of memory space.

It is a further object of the invention to provide a method for dividing a font character into prioritized segments that capture key recognition features of the character and are of assistance in its rendering.

Another object of the invention is to provide a method of further dividing a font character into smaller segments having simple primitive shapes that join with one another seamlessly;

Yet another object of the invention is to provide a method for storing character representations. based on the above hierarchical segmentation scheme, in a minimal amount of computer memory.

It is still a further object of the invention to provide a method for associating rendering factors with the font characters in order to enhance rendering performance for smaller point sizes and/or resolutions.

B. Brief Summary Of The Invention

The present invention approaches the representation of character outline contours by decomposing the outline image of a character into easily and robustly decodable primitive geometric elements. These primitives can be represented by a relatively small amount of data resulting in efficient utilization of memory space. Stored font representations may be retrieved in real time for interactive WYSIWYG screen displays, or off-line for typesetting of high resolution text in a raster image processor (RIP); the representations contain sufficient information to drive screen display and/or printer devices.

According to the present invention, each character is first divided into vertical or horizontal segments called "sections"; these are slices of a character's image corresponding to those features important for character recognition and rendering. It has been found that a nearly optimum set of sections can be obtained by introducing linear boundaries through the character's image at "maximum" and "minimum" points of its outline contours. For horizontal sectioning these points occur where the slope of the character contour is equal to zero or undergoes an abrupt vertically oriented change, e.g. at a vertical cusp. For vertical sectioning, they occur where the slope is infinite or undergoes an abrupt horizontally oriented change, e.g. at a horizontal cusp. The remainder of this description will be directed, primarily, to horizontally segmented characters, it being understood that correlative vertical segmentation is implied as well.

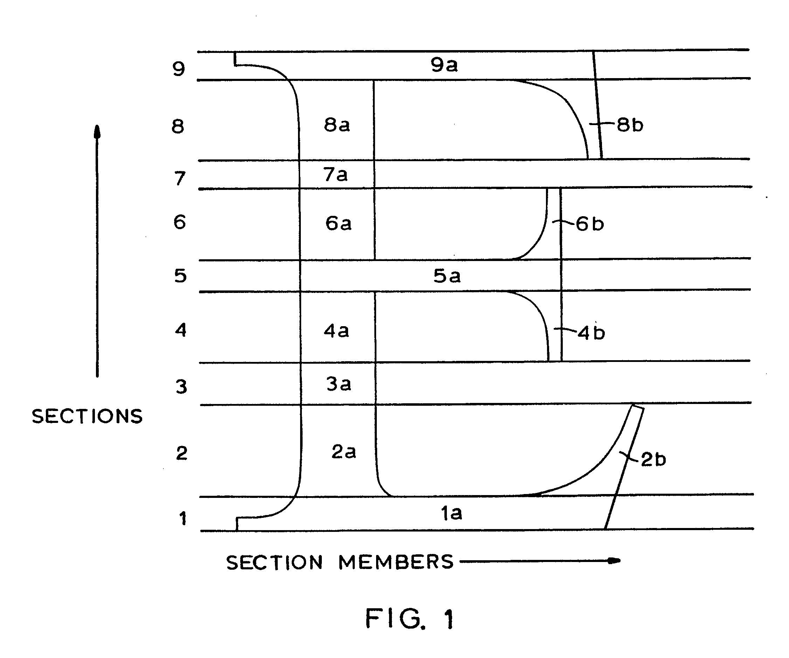

Often, the boundaries generated by dividing a character into sections will enclose more than one discrete character element, such elements being displaced horizontally from one another. For example, in the depiction of the letter "E" in Figure 1, section 1 contains one discrete character element, while section 2 contains two (i.e. 2a and 2b). These individual discrete character elements of a section are referred to herein as "section members" and are hierarchically subordinate to the section to which they belong.

Individual section members may be further segmented into primitive four-sided shapes, generally referred to as "subsections". The optimal number of subsections is determined by the curvezoid generation computer program described below, based on the complexity of the character outline contour corresponding to the section member. For example, returning to Figure 1, section member 4a would require only a single subsection for adequate representation because of its simplicity, while the same would not be true for section member 4b.

The present invention represents subsections in one of two ways. The simplest makes use of trapezoidal elements. In this case all four sides are straight lines, two of them being parallel. In general these lines are not of equal length, and any of them may have zero length.

Alternatively, the four-sided elements can take the form of "curvezoids", which are defined as primitive shapes similar to trapezoids except that the non-parallel sides can be curvilinear instead of straight lines. In the preferred embodiment, these curvilinear segments are circular arc sections; however, other conic sections, higher order curves such as cubics, and composite curves such as splines may also be used. Curved and straight-line segments may be combined within the same subsection on opposite sides. Henceforth, the term "curvezoid" will be used to refer interchangeably to curvezoidal and trapezoidal subsections, the latter being viewed as a special case of the former.

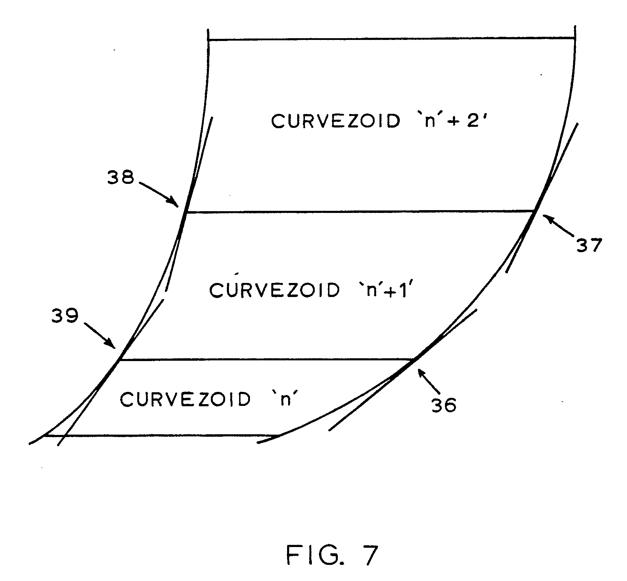

A key feature of the invention is the maintenance of continuity of slope at the points where adjacent curvezoid subsections join. This avoids an undesirable "rippled" appearance when a character is rendered. Continuity is accomplished during the process of dividing a section member into subsections, by defining successive curvilinear segments such that their tangents are identical at the point of intersection. This is shown more clearly in Figure 7 for horizontal curvezoids. More specifically, this procedure begins with an estimation of the slope of the outline contour at a number of points on both sides of a section member. These slope estimates are then used to generate abutting circular arcs such that the slope at each arc joint is equal to the estimated value for that point. Satisfying this condition ensures continuity of slope. The generated arcs for the two sides are then compared; the arc having a shorter vertical distance between end points is used to determine the height of the curvezoid. The other arc is then split at this height and the lower part of the split curve forms the other side of the curvezoid. The foregoing is repeated until the entire

3

section member has been segmented.

This procedure determines the number of curvezoids necessary to represent a given section member. Whether a particular curvezoidal element will actually be displayed on the output device, however, depends on the priority assigned to that element; see "Prioritizing of Stored Data," infra.

For the trapezoidal representation, trapezoids are generated such that the sides thereof approximate the curvilinear boundaries of a character's outline contour to a selected degree of accuracy. This degree of accuracy is based on the largest point size and resolution of the output device. The trapezoid generation computer program assigns "rendering factors" to individual trapezoids. These rendering factors are used to prioritize rendering of the font characters. Based on the desired output point size and resolution, a rendering value is determined either by the user directly or with the aid of rendering software. Only those trapezoids having a rendering factor less than the calculated rendering value are transformed and rendered. For lower point sizes and/or smaller resolutions this results in considerable reduction in the rendering computational overhead, as only the essential trapezoids in a character are actually transformed and rasterized.

## C. Detailed Description Of The Preferred Embodiment

The foregoing and other and further objects of the invention will be understood more readily from the following detailed description of the invention, when taken in conjunction with the accompanying drawings, in which:

Fig. 1 is a representation of the character "E" which has been divided into horizontal sections and section members in accordance with the present invention;

Fig. 2 depicts a section member divided into horizontal curvezoid subsections in accordance with the present invention;

Fig. 3 shows a typical horizontal curvezoid subsection for a horizontally sectioned character;

Fig. 4 is a representation of the character "E" which has been divided into vertical sections in accordance with the present invention;

Fig. 5 depicts a section member divided into vertical curvezoid subsections in accordance with the present invention;

Fig. 6 shows a typical vertical curvezoid subsection for a vertically sectioned character;

Fig. 7 illustrates the continuity of slope across successive curvezoid subsections which have curvilinear sides, obtained in accordance with the present invention;

Fig. 8 is a flow chart of the curvezoid rendering algorithm;

Fig. 9 summarizes the rendering algorithm for multiresolution trapezoid characters using rendering factors and character shape information.

Fig. 10 depicts an example of the application of non-linear scaling to a character encoded in multiresolution trapezoid format.

### a) Horizontal Sections

As shown in Figure 1, horizontal boundaries are introduced to separate a character into horizontal sections at the local, vertically directed maxima and minima of the character's outline contour. Sections 1, 3, 5, 7 and 9 contain only one member (1a, 3a, 5a, 7a and 9a, respectively), while the remaining sections each contain two (denoted by the numeral corresponding to the section, followed by the letter a or b).

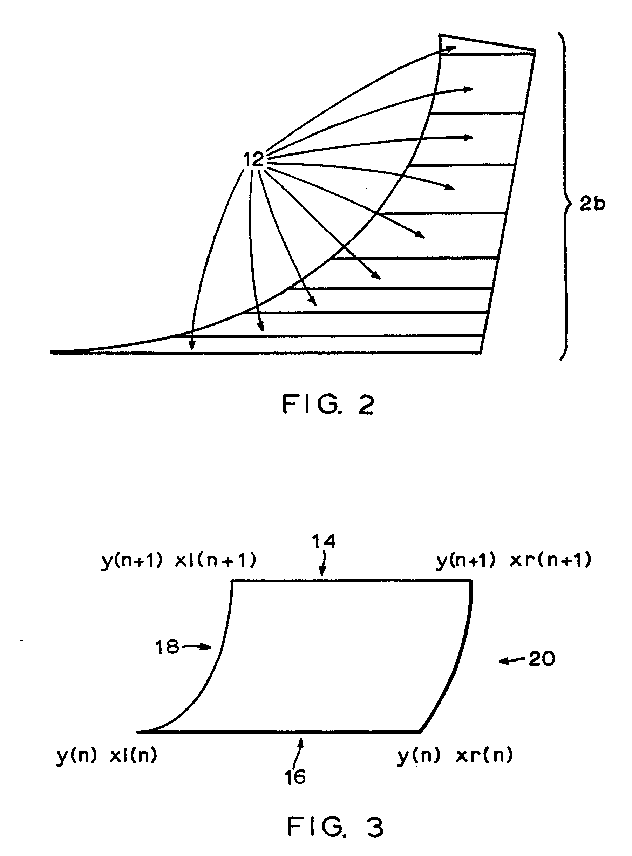

In Figure 2, section member 2b has been further decomposed into curvezoid subsections 12. As previously discussed, the number of curvezoid subsections included within a section member is determined by the complexity of the character outline contour.

A representative horizontal curvezoid subsection is further defined in Figure 3. Base line 16, which is found at Y-coordinate $y(n)$ in a cartesian coordinate system, defines the bottom of the subsection. Horizontal subsections are ordered vertically and upward. End line 14, found at Y-coordinate $y(n+1)$, defines the top of the subsection depicted in Figure 3 and the bottom of the next subsection (if any) vertically disposed thereabove.

Left side 18 and right side 20 are curvilinear segments which approximate the character contours. The points $xl(n)$ and $xl(n+1)$ represent the points of intersection between left side 18, end line 14 and base line 16, thereby defining the left end points of end line 14 and base line 16. Similarly, the points $xr(n)$ and $xr(n+1)$ represent the points of intersection between right side 20, end line 14 and base line 16, thereby

4

defining the right end points of end line 14 and base line 16.

### b) Vertical Sections

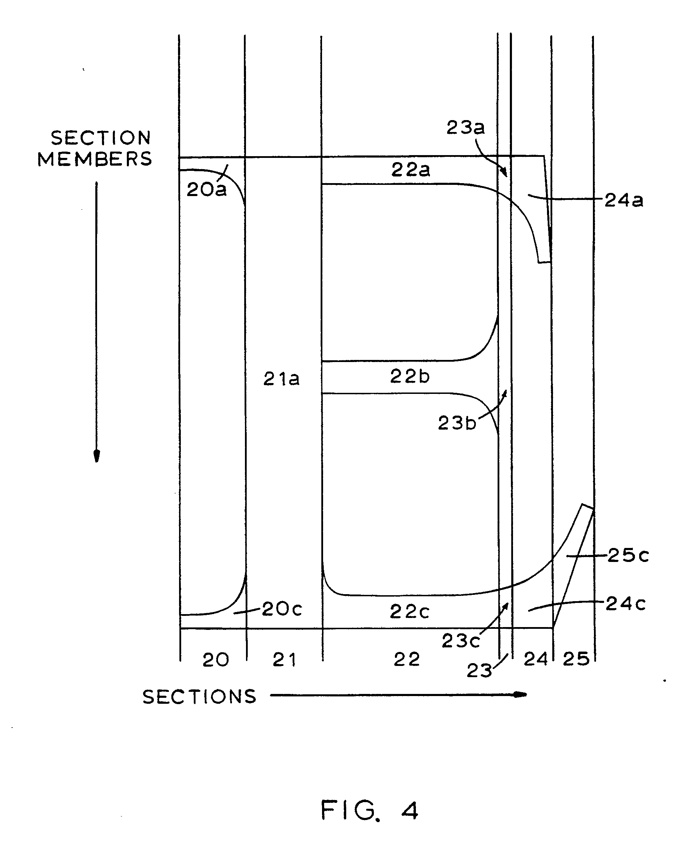

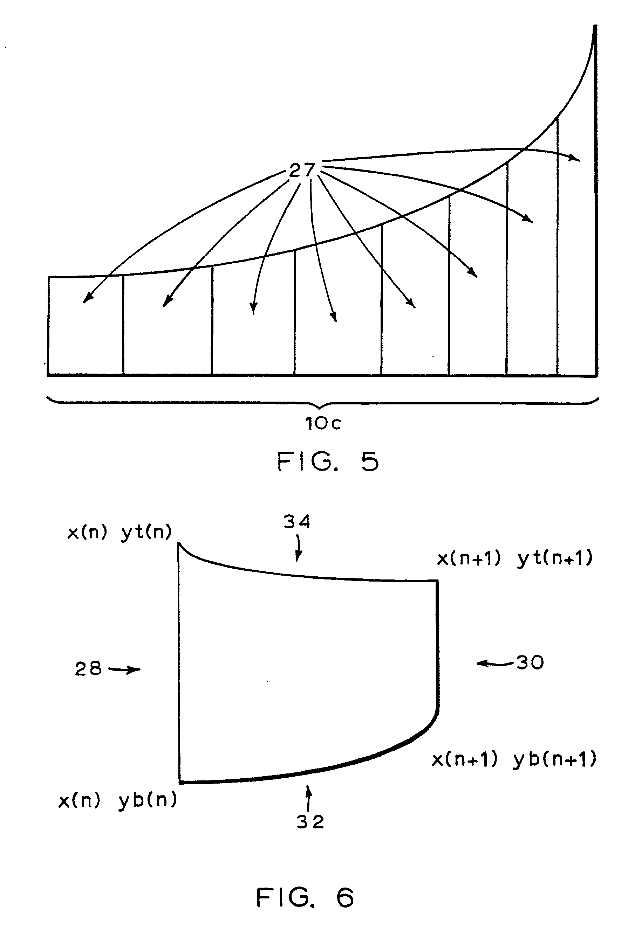

Figure 4 illustrates how the same character may be separated into vertical sections by introducing vertical boundaries at the horizontally directed maxima or minima of the outline contour; in this case sections 21 and 25 each contain one member (21a and 25c, respectively), sections 20 and 24 each contain two members (20a and 20c, and 24a and 24c, respectively), and each of the rest contain three members. Emery member of a section is further segmented into vertically oriented curvezoidal subsections as shown in Figure 5, wherein curvezoid subsections 27 for section member 10c are illustrated.

A representative vertical curvezoid subsection is further defined in Figure 6. Vertical subsections are ordered from left to right. Base line 28, which is found at X-coordinate $x(n)$, defines the left side of the subsection. End line 30, found at X-coordinate $x(n+1)$, defines the right side of the subsection depicted in Figure 6 and the left side of the next subsection (if any) horizontally disposed to the right thereof.

Bottom side 32 and top side 34 are curvilinear segments which approximate the character contours. The points $yb(n)$ and $yb(n+1)$ represent the points of intersection between bottom side 32, base line 28 and end line 30, thereby defining the bottom end points of base line 28 and end line 30. Similarly, the points $yt(n)$ and $yt(n+1)$ represent the points of intersection between top side 34, base line 28 and end line 30, thereby defining the top end points of base line 28 and end line 30.

Figure 7 illustrates the results of defining curvilinear segments of adjacent curvezoids such that the slopes of the segments are identical.

### c) Data Storage Hierarchy

For purposes of storage and rendering, the data specifying contours of a character are organized as a three-level hierarchy. In this arrangement, sections comprise the top most level followed by section members at the middle level and subsections at the third level. The following table illustrates this structure for both the horizontally sectioned characters and vertically sectioned characters:

EP 0 395 021 A2

**Section First**   *(bottom/left most section in character)*

    **Section Member First**   *(left/bottom most member in section)*

        **Subsection First**   (bottom/left most Subsection in member)
.........................
.........................
.........................
        **Subsection Last**   *(top/right most Subsection in member)*

...................................
...................................
...................................

    **Section Member Last**   *(right/top most member in section)*

        **Subsection First**   *(bottom/left most Subsection in member)*
.........................
.........................
.........................
        **Subsection Last**   *(top/right most Subsection in member)*

.........................
.........................
.........................

**Section Last**   *(top/right most section in character)*

    **Section Member First**   *(left/bottom most member in section)*

        **Subsection First**   *(bottom/left most Subsection in member)*
.........................
.........................
.........................
        **Subsection Last**   *(top/right most Subsection in member)*

...................................
...................................
...................................

    **Section Member Last**   *(right/top most member in section)*

        **Subsection First**   *(bottom/left most Subsection in member)*
.........................
.........................
.........................
        **Subsection Last**   *(top/right most Subsection in member)*

**Table   1.**

6

Data stored at the lowest level in this arrangement -subsections - consist of specifications for the end points of a subsection's base line and specifications for the two sides of a subsection. This set of specifications is collectively referred to as the "subsection data storage element." The total number of such basic data storage elements reflects the total storage space requirements for any particular character. When a sequence of adjacent subsections is rendered by the output device, the base line of the next subsection serves as the end line of the current subsection. A minimum of two adjacent subsection data storage elements are, therefore, needed to fully render a subsection; this results in the need for at least two subsection data storage elements to retain the data describing a single section member. Accordingly, a section member containing 'm' subsections would generally require 'm + 1' subsection data storage elements for rendering, since one line segment is shared by the adjacent units.

### d) Data Specification

In order to specify the base line of a subsection, the X and Y coordinates of its end points are stored. In the case of trapezoidal subsections, specifications for the sides of a subsection are not required since the end points of adjacent elements will serve to define the required straight lines. Curved segments, however, require additional specification data. In the preferred embodiment, wherein circular arcs are employed, specification of a subsection's curvilinear sides may take several forms, including any of the following three alternatives: coordinates of the arc's center ("arc center specification"); radius of the arc ("arc radius specification"); or ratio of the arc chord height to half the arc chord length ("chord ratio specification").

### e) Storage Formats

In order to store the data specifications, the invention permits two storage formats; "regular" format and "compact" format. The latter compresses specification data by exploiting correlations that exist between corresponding components of successive subsection data storage elements within a section member. These formats can be used with trapezoidal as well as curvezoidal representations.

### f) Regular Storage Format

In regular storage format, the absolute values of the components of a subsection's data storage element are individually stored. Consequently, for a given method of specifying a curvezoid, the size of the data storage elements is constant. The amount of storage required for the entire character may be obtained simply by multiplying the total number of data storage elements in the character by the size of such elements. The following table shows the sequential layout of specification data for a subsection in the regular storage format:

### Sequential Layout Of Horizontally Oriented Subsections

1. Status Information : 2 bytes
2. Base Line Y Position : 2 bytes
3. Base Line left hand side x coordinate : 2 bytes
4. Base Line right hand side x coordinate : 2 bytes
5. X coordinate of left hand side arc : 4 bytes
7. Y Coordinate of left hand side arc : 4 bytes
8. X coordinate of right hand side arc : 4 bytes
9. Y coordinate of right hand side arc : 4 bytes
OR
5. Radius of left hand side arc : 4 bytes
6. Radius of right hand side arc : 4 bytes

OR
5. Chord Ratio of left hand side arc : 4 bytes
6. Chord Ratio of right hand side arc : 4 bytes

Sequential Layout Of Vertically Oriented Subsections

1. Status information : 2 bytes
2. Base Line X Position : 2 bytes
3. Base Line top Y coordinate : 2 bytes
4. Base Line bottom Y coordinate : 2 bytes
5. X coordinate of top side arc : 4 bytes
7. Y Coordinate of top side arc : 4 bytes
8. X coordinate of bottom side arc : 4 bytes
9. Y coordinate of bottom side arc : 4 bytes
OR
5. Radius of top side arc : 4 bytes
6. Radius of bottom side arc : 4 bytes
OR
5. Chord Ratio of top side arc : 4bytes
6. Chord Ratio of bottom side arc : 4 bytes

In order to store in regular format a curvezoid data storage element described by arc center specification, the following data are necessary: (1) the X and Y coordinates (two bytes each) of the endpoints of the curvezoid base line; (2) the X and Y coordinates (four bytes each) for the center points of the two side arcs; and (3) status bits (two bytes) indicating (i) whether each arc is oriented clockwise or counterclockwise, and (ii) whether the curvezoid subsection occurs at the beginning of a section member. The foregoing data, in conjunction with the base line coordinates for the next curvezoid, are sufficient to permit the curvezoid to be rendered.

In order to store in regular format a curvezoid data storage element described by arc radius specification, the following data are necessary: (1) the X and Y coordinates (two bytes each) of the endpoints of the curvezoid base line; (2) the radii (four bytes each) of the two side arcs; and (3) status bits (two bytes) indicating whether each arc is oriented clockwise or counterclockwise, add whether the curvezoid subsection occurs at the beginning of a section member. The foregoing data, in conjunction with the base line coordinates for the next curvezoid, are sufficient to permit the curvezoid to be rendered.

In order to store in regular format a curvezoid data storage element described by arc chord ratio specification, the following data are necessary: (1) the X and Y coordinates (two bytes each) of the endpoints of the curvezoid base line; (2) the chord ratios (four bytes each) for the two side arcs; and (3) status bits (two bytes) indicating whether each arc is oriented clockwise or counterclockwise, and whether the curvezoid subsection occurs at the beginning of a section member. The foregoing data, in conjunction with the base line coordinates for the next curvezoid, are sufficient to permit the curvezoid to be rendered.

In order to store in regular multiresolution format a trapezoid data storage element, the following data are necessary: (1) the X and Y coordinates (two bytes each) of the endpoints of the trapezoid base line; (2) status bits (two bytes) indicating whether the trapezoid element occurs at the beginning of a section member, and a rendering factor. The rendering factor for a trapezoid is a 16-valued weighting factor that determines whether, at a given resolution and font point size, the trapezoid is to be included in the rendering list. For lower point sizes and/or resolutions a large number of trapezoids are not required, and consequently only the essential subsections are transformed and rasterized.

In order to conserve storage space, the base line specification for all of the foregoing formats is stored as a triplet coordinate set. For horizontally oriented subsections, the two end points differ only in their X coordinates; therefore, as depicted in Figure 3, only the coordinates $y(n)$, $xl(n)$ and $xr(n)$ are necessary to specify the base line. For vertically oriented subsections, the two end points differ only in their Y coordinates; as shown in Figure 6, only the coordinates $x(n)$, $yt(n)$ and $yb(n)$ are necessary.

Bit assignments for the status information bytes are as follows. Bit 7 indicates if the subsection is the first one in a section member, bit 5 indicates the direction of drawing for the left (or top) side arc and bit 6 indicates the direction of drawing for the right (or bottom) arc. For trapezoidal representation a 16-valued rendering factor, stored in bits 3, 4, 5, and 6 of the status entry, is associated with every trapezoid.

8

### g) Compact Storage Format

In compact storage format, corresponding values of the components of successive data storage elements (other than the first such element in a section member) are stored as differential, rather than absolute values. Because differential values are typically much smaller than absolute values, less memory space is required for storage. This also means that the amount of data stored for every data storage element is not fixed. The following table shows the sequential layout of specification data for a subsection in the compact storage format:

### Sequential Layout Of Horizontally Oriented Subsections

1. Status Information : 1 or 2 bytes
2. Base Line Y position,Differential : 1 or 2 bytes
3. Base Line left hand side x coordinate,Differential : 1 or 2 bytes
4. Base Line right hand side x coordinate,Differential : 1 or 2 bytes
5. X coordinate of left hand side arc,Differential : 1, 2, 3, or 4 bytes
7. Y Coordinate of left hand side arc,Differential : 1,2,3, or 4 bytes
8. X coordinate of right hand side arc,Differential : 1, 2, 3, or 4 bytes
9. Y coordinate of right hand side arc,Differential : 1, 2, 3, or 4 bytes
OR
5. Radius of left hand side arc,Differential : 1, 2, 3, or 4 bytes
6. Radius of right hand side arc,Differential : 1, 2, 3, or 4 bytes
OR
5. Chord Ratio of left hand side arc,Differential : 1,2,3, or 4 bytes
6. Chord Ratio of right hand side arc, Differential : 1,2,3, or 4 bytes

### Sequential Layout Of Vertically Oriented Subsections

1. Status information : 1 or 2 bytes
2. Base Line X Position,Differential : 1 or 2 bytes
3. Base Line top Y coordinate, Differential : 1 or 2 bytes
4. Base Line bottom Y coordinate, Differential : 1 or 2 bytes
5. X coordinate of top side arc,Differential : 1, 2, 3, or 4 bytes
7. Y Coordinate of top side arc,Differential : 1, 2, 3, or 4 bytes
8. X coordinate of bottom side arc,Differential : 1, 2, 3, or 4 bytes
9. Y coordinate of bottom side arc,Differential : 1, 2, 3, or 4 bytes
OR
5. Radius of top side arc,Differential : 1, 2, 3, or 4 bytes
6. Radius of bottom side arc,Differential : 1, 2, 3, or 4 bytes
OR
5. Chord Ratio of top side arc,Differential : 1, 2, 3, or 4 bytes
6. Chord Ratio of bottom side arc,Differential : 1, 2, 3, or 4 bytes

In order to store in compact format a curvezoid data storage element described by arc center specification, the following data are necessary: (1) differences between the absolute X and Y coordinate values for the corresponding base line end points of the current subsection and the previous subsection (one or two bytes each); (2) the differences between the absolute X and Y coordinate values for the arc centers of the corresponding side arcs of the current subsection and the previous subsection (one, two, three or four bytes each); and (3) status bits (one or two bytes) indicating whether the curvezoid subsection occurs at the beginning of a section member, whether each arc is oriented clockwise or counterclockwise, whether the two sides are arcs or straight lines, and the sizes of the stored data for each differential coordinate. Where a subsection is the first in a section member, all coordinate values are stored absolutely using the layout format given in Table 2. The foregoing data, in conjunction with the base line coordinates for the next curvezoid, are sufficient to permit the curvezoid to be rendered.

9

In order to store in compact format a curvezoid data storage element described by arc radius specification, the following data are necessary: (1) differences between the absolute X and Y coordinate values for the corresponding base line end points of the current subsection and the previous subsection (one or two bytes each); (2) the differences between the radii of the corresponding side arcs of the current subsection and the previous subsection (one, two, three or four bytes each); and (3) status bits (one or two bytes) indicating whether the curvezoid subsection occurs at the beginning of a section member, whether each arc is oriented clockwise or counterclockwise, whether the two sides are arcs or straight lines, and the sizes of the stored data for each differential coordinate. Where a subsection is the first in a section member, all coordinate values are stored absolutely using the layout format given in Table 2. The foregoing data, in conjunction with the base line coordinates for the next curvezoid, are sufficient to permit the curvezoid to be rendered.

In order to store in compact format a curvezoid data storage element described by arc chord ratio specification, the following data are necessary: (1) differences between the absolute X and Y coordinate values for the corresponding base line end points of the current subsection and the previous subsection (one or two bytes each); (2) the differences between the chord ratios of the corresponding side arcs of the current subsection and the previous subsection (one, two, three or four bytes each); and (3) status bits (one or two bytes) indicating whether the curvezoid subsection occurs at the beginning of a section member, whether each arc is oriented clockwise or counterclockwise, whether the two sides are arcs or straight lines, and the sizes of the stored data for each differential coordinate. Where a subsection is the first in a section member, all coordinate values are stored absolutely using the layout format given in Table 2. The foregoing data, in conjunction with the base line coordinates for the next curvezoid, are sufficient to permit the curvezoid to be rendered.

Finally, in order to store in compact multiresolution format a trapezoid data storage element, the following data are necessary: differences between the absolute X and Y coordinate values for the corresponding base line end points of the current subsection and the previous subsection (one or two bytes each); (2) status bits (one byte) indicating whether the trapezoid element occurs at the beginning of a section member, and the sizes of the stored data for each differential coordinate, and a 16-valued rendering factor. Where a subsection is the first in a section member, all coordinate values are stored absolutely using the layout format given in Table 2.

In order to conserve storage space, the base line specification is stored as a triplet coordinate set, as in regular storage format. Bit assignments for the status information bytes are as follows. Bit 7 indicates if the subsection is the first one in a section member, bit 5 indicates the direction of drawing for the left (or top) side arc and bit 6 indicates the direction of drawing for the right (or bottom) arc. Bits 0, 1, and 2 are used for indicating the byte sizes of the three stored coordinate differentials for the base line. A zero bit indicates a size of one byte, while a one bit indicates a size of two bytes.

Similarly, bit pairs 8-9, 10-11, 12-13, and 14-15 are used to indicate the byte sizes of the four stored coordinate differentials for the two side arcs. A zero value (00) indicates 1 byte, a value of one (01) indicates two bytes, a value of two (10) indicates three bytes, and a value of three (11) indicates four bytes. All four bit pairs are employed for data storage elements described by arc center specification. Only two pairs, however, are needed in the case of arc radius or arc chord ratio specification.

For the trapezoidal representation there are no side arcs and hence bits 3, 4, 5, and 6 are used to store a 16-valued rendering factor; only one status information byte is necessary.

h) Prioritizing of Stored Data

Characters are most easily decomposed into curvezoidal (or trapezoidal) elements by a curvezoid generation computer program, which first heuristically identifies those sections of a character associated with important visual features (such as vertical and horizontal strokes, counters and serifs). These features are important for legible rendering of characters at small point sizes and/or for low-resolution output devices. The priority designations thus defined can be further optimized interactively after the fonts have been converted to the curvezoid format. In general, the sections that include horizontal and vertical strokes are the most important ones, followed by those which indicate the open spaces and counters, followed by those which indicate the serifs. Priority designation information can be stored either in the font file or in a separate file.

Section members of the prioritized sections are decomposed into curvezoidal elements following the procedure for maintaining continuity of slope, as described previously.

10

In the case of trapezoid representation, the curvezoid generation computer program assigns "rendering factors" to individual trapezoids based on the degree of representational accuracy necessary for the largest point size, given the resolution of the output device.

All of the foregoing operations may be performed manually, although computer implementation obviously provides far greater convenience.

i) Rasterization of Characters

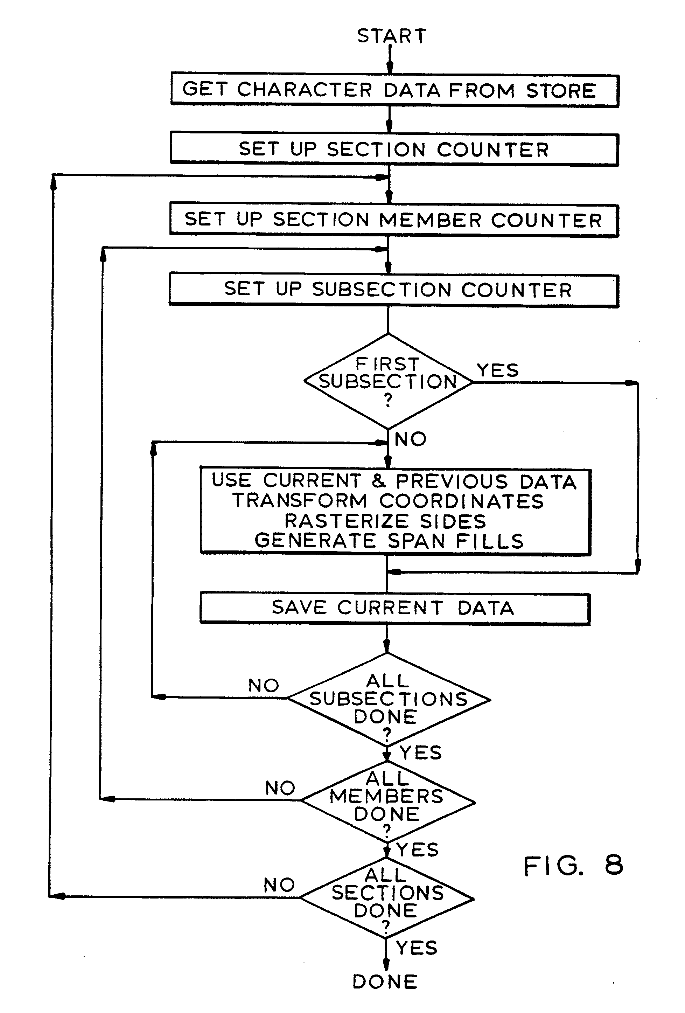

Figure 8 shows a standard rasterization algorithm for rendering curvezoid-coded characters at large point sizes and/or high resolution output. The algorithm traverses the storage data hierarchy, rendering the characters section by section, section member by section member, and subsection by subsection. In order to render a subsection, its data must be combined with the data for the next subsection. This is accomplished by providing a temporary storage for the current subsection data in the innermost loop of the algorithm. When the algorithm reaches the beginning of a section member, the first subsection data is simply stored without any output during the first pass through this innermost loop. In all subsequent passes, proceeding until the end of the section member is reached, the stored data is combined with the newly read data to render the previous subsection.

The subsection rendering process proceeds in steps. First, the outline coordinates are transformed using scaling factors which zre determined by (i) the required point size and (ii) the resolution of the printer marking engine or the screen display. Next, the arcs and/or lines that form the two sides of the subsection are simultaneously rasterized. During this rasterization, a span fill command is generated every time the vertical coordinates of the two rasterizer outputs change. This span fill command instructs the display processor to draw a horizontal line in its frame buffer using the endpoints generated by the rasterizer. The foregoing steps are repeated until the top of the subsection is reached. This completes the rendering of a single subsection.

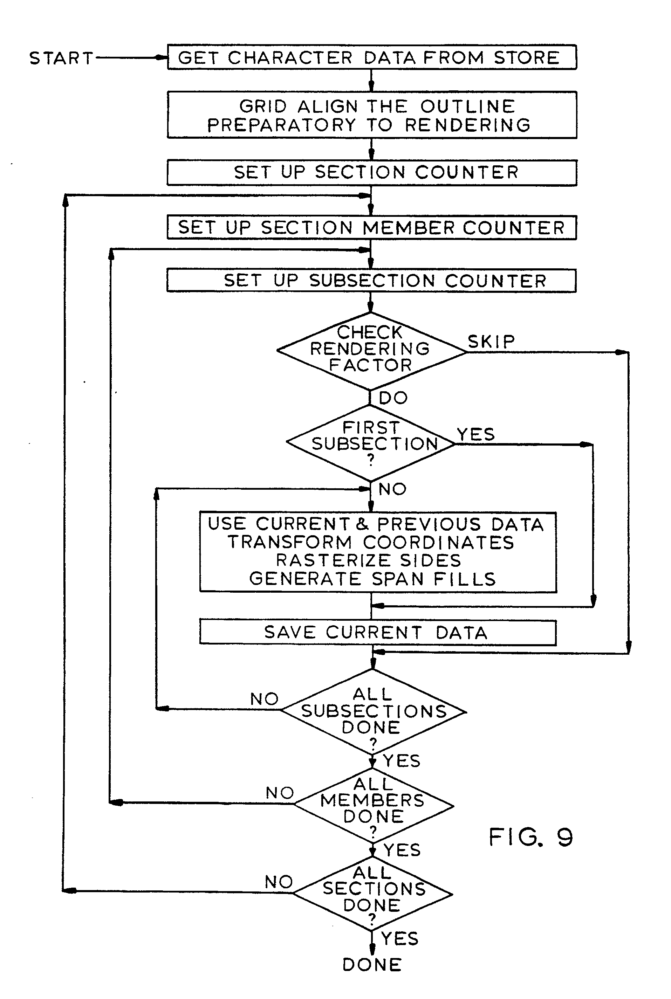

Figure 9 shows a modified rasterization algorithm for rendering multiresolution trapezoid coded characters for small point sizes and/or low resolutions. The main difference between this algorithm and the one depicted in Figure 8 lies in the inclusion of two additional boxes in the modified algorithm, which call for grid alignment of the outline and comparison of rendering factors. The grid alignment step pre-distorts a character's outline data before it is rendered. This pre-distortion is carried out by assigning a different vertical scaling factor to every section in the character, in such a fashion that the sections in a character which are most important visually (i.e., those to which a priority designation has been assigned) align with the underlying rasterization grid. For the example shown in Figure 1, the visually important sections are 1, 5, and 9; in order to align these sections with the rasteriation grid, the intermediate sections are compressed or expanded. The scaling factors for this purpose are selected such that the overall capital height of the character remains equal to the default capital height for the font at the desired point size. This pre-distortion preserves the readability and legibility of the rendered text, although some loss in the quality of the rendered character shapes is thereby produced.

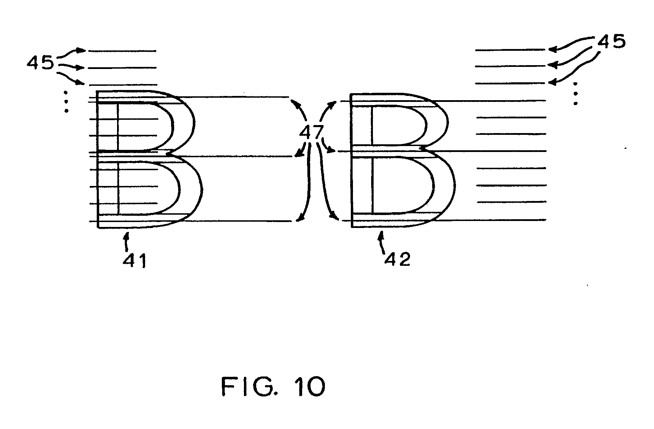

An example is given in Figure 10 for the letter 'B'. Grid lines 45 represent raster scan lines on a standard cathode-ray tube display. Median lines 47 bisect the most visually important sections of the character. In a raster scanning output device, display of such median lines maximizes character legibility at low resolutions. Character 41, which has been placed on grid lines 45 without distortion, contains only one critical median line that aligns with a grid line; only this median line will be displayed. Character 42 has been scaled in a non-linear fashion, such that the lower portion thereof is enlarged and the upper portion reduced relative to character 41. This permits all three critical median lines 47 to align with grid lines 45.

The second difference in the modified algorithm relates to the use of rendering factors for selecting subsections to be rendered. Before a font is rasterized, a rendering factor is selected (either by user specification or calculated by the rendering software) for use with the rendering algorithm. This factor is based on the desired point size and the output resolution. Before entry into the innermost loop of the algorithm, this factor is compared with the rendering factor associated with every subsection. The subsection is rendered only if its associated rendering factor is less than the calculated factor for the font. Thus, sufficiently small point sizes permit a large number of subsections to be skipped; because they need not be transformed and rasterized, considerable improvement in performance is obtained. Data storage elements for the first and last subsections are always included for all point sizes, thereby assuring that data is saved for at least these subsections. As hereinabove explained, a minimum of two storage elements are necessary to define a curvezoid.

11

The terms and expressions which have been employed are used as terms of description and not of limitation, and there is no intention, in the use of such terms and expressions, of excluding any equivalents of the features shown and described or portions thereof, but it is recognized that various modifications are possible within the scope of the invention claimed.

## Claims

1. A method of encoding characters comprising:

a. Separating each character into horizontal sections, the boundaries of which correspond to horizontal lines that intersect the contours of said characters at a vertically directed cusp or at a point or points where the slope of said contour equals zero;

b. Separating each discrete member of a section into one or more primitive four-sided subsections consisting of two horizontal parallel straight lines of zero or finite length and two segments of a conic section, such that corresponding conic section segments of vertically adjacent subsections retain continuity of slope at their junction.

2. A method of encoding characters comprising:

a. Separating each character into vertical sections, the boundaries of which correspond to vertical lines that intersect the contours of said characters at a horizontally directed cusp or at a point or points where the slope of said contour is infinite;

b. Separating each discrete member of a section into one or more primitive four-sided subsections consisting of two vertical parallel straight lines of zero or finite length and two segments of a conic section, such that corresponding conic section segments of horizontally adjacent subsections retain continuity of slope at their junction.

3. A method of encoding characters comprising:

a. Separating each character into horizontal sections, the boundaries of which correspond to horizontal lines that intersect the contours of said characters at a vertically directed cusp or at a point or points where the slope of said contour equals zero;

b. Separating each discrete member of a section into one or more primitive four-sided subsections consisting of two horizontal parallel straight lines of zero or finite length and two non-horizontal straight lines of finite length.

4. A method of encoding characters comprising:

a. Separating each character into vertical sections, the boundaries of which correspond to vertical lines that intersect the contours of said characters at a horizontally directed cusp or at a point or points where the slope of said contour is infinite.

b. Separating each discrete member of a section into one or more primitive four-sided subsections consisting of two vertical parallel straight lines of zero or finite length and two non-vertical straight lines of finite length.

5. A method of storing in a computer memory horizontal arc center character representations generated in accordance with claim 1, comprising the steps of identifying and entering into memory information for each subsection comprising:

a. The Y-coordinate specifying the subsection base line;

b. The X-coordinate specifying the left side of the subsection base line;

c. The X-coordinate specifying the right side of the subsection base line;

d. The X-coordinate specifying the center point of a circular arc which commences on the left side of said subsection base line and ends on the left side of the base line of the subsection positioned directly above said subsection, if any;

e. The Y-coordinate specifying the center point of a circular arc which commences on the left side of said subsection base line and ends on the left side of the base line of the subsection positioned directly above said subsection, if any;

f. The X-coordinate specifying the center point of a circular arc which commences on the right side of said subsection base line and ends on the right side of the base line of the subsection positioned directly above said subsection, if any;

g. The Y-coordinate specifying the center point of a circular arc which commences on the right side of said subsection base line and ends on the right of the base line of the subsection positioned directly above said subsection, if any;.

h. Status bits indicating whether each arc is oriented clockwise or counterclockwise and whether said subsection is the first subsection of a section member.

EP 0 395 021 A2

6. A method of storing in a computer memory vertical arc center character representations generated in accordance with claim 2, comprising the steps of identifying and entering into memory information for each subsection comprising:

a. The X-coordinate specifying the subsection base line;

b. The Y-coordinate specifying the top side of the subsection base line;

c. The Y-coordinate specifying the bottom side of the subsection base line;

d. The Y-coordinate specifying the center point of a circular arc which commences on the top side of said subsection base line and ends on the top side of the base lane of the subsection positioned directly to the right of said subsection, if any;

e. The X-coordinate specifying the center point of a circular arc which commences on the top side of said subsection base line and ends on the top side of the base line of the subsection positioned directly to the right of said subsection, if any;

f. The Y-coordinate specifying the center point of a circular arc which commences on the bottom side of said subsection base line and ends on the bottom side of the base line of the subsection positioned directly to the right of said subsection, if any;

g. The X-coordinate specifying the center point of a circular arc which commences on the bottom side of said subsection base line and ends on the bottom side of the base line of the subsection positioned directly to the right of said subsection, if any;

h. Status bits indicating whether each arc is oriented clockwise or counterclockwise and whether said subsection is the first subsection of a section member.

7. A method of storing in a computer memory horizontal arc radius curvezoid character representations generated in accordance with claim 1, comprising the steps of identifying and entering into memory information for each subsection comprising:

a. The Y-coordinate specifying the subsection base line;

b. The X-coordinate specifying the left side of the subsection base line;

c. The X-coordinate specifying the right side of the subsection base line;

d. The radius of a circular arc which commences on the left side of said subsection base line and ends on the left side of the base line of the subsection positioned directly above said subsection, if any;

e. The radius of a circular arc which commences on the right side of said subsection base line and ends on the right side of the base line of the subsection positioned directly above said subsection, if any;

f. Status bits indicating whether each arc is oriented clockwise or counterclockwise and whether said subsection is the first subsection of a section member.

8. A method of storing in a computer memory vertical arc radius character representations generated in accordance with claim 2, comprising the steps of identifying and entering into memory information for each subsection comprising:

a. The X-coordinate specifying the subsection base line;

b. The Y-coordinate specifying the top side of the subsection base line;

c. The Y-coordinate specifying the bottom side of the subsection base line;

d. The radius of a circular arc which commences on the top side of said subsection base line and ends on the top side of the base line of the subsection positioned directly to the right of said subsection, if any;

e. The radius of a circular arc which commences on the bottom side of said subsection base line and ends on the bottom side of the base line of the subsection positioned directly to the right of said subsection, if any;

f. Status bits indicating whether each arc is oriented clockwise or counterclockwise and whether the subsection is the first subsection of a section member.

9. A method of storing in a computing memory horizontal arc chord ratio character representations generated in accordance with claim 1, comprising the steps of identifying and entering into memory information for each subsection comprising:

a. The Y-coordinate specifying the subsection base line;

b. The X-coordinate specifying the left side of the subsection base line;

c. The X-coordinate specifying the right side of the subsection base line;

d. The ratio of the chord height of a circular arc which commences on the left side of said subsection base line and ends on the left side of the base line of the subsection positioned directly above said subsection, if any, to half the length of said circular arc;

e. The ratio of the chord height of a circular arc which commences on the right side of said subsection base line and ends on the right side of the base line of the subsection positioned directly above said subsection, if any, to half the length of said circular arc;

13

f. Status bits indicating whether each arc is oriented clockwise or counterclockwise and whether said subsection is the first subsection of a section member.

10. A method of storing in a computer memory vertical arc chord ratio character representations generated in accordance with claim 2, comprising the steps of identifying and entering into memory information for each subsection comprising:

a. The X-coordinate specifying the subsection base line;

b. The Y-coordinate specifying the top side of the subsection base line;

c. The Y-coordinate specifying the bottom side of the subsection base line;

d. The ratio of the chord height of a circular arc which commences on the top side of said subsection base line and ends on the top side of the base line of the subsection positioned directly to the right of said subsection, if any, to half the length of said circular arc;

e. The ratio of the chord height of a circular arc which commences on the bottom side of said subsection base line and ends on the bottom side of the base line of the subsection positioned directly to the right of said subsection, if any, to half the length of said circular arc.

f. Status bits indicating whether each arc is oriented clockwise or counterclockwise and whether said subsection is the first subsection of a section member.

11. A method of storing in a computer memory horizontal multiresolution trapezoid character representations generated in accordance with claim 3, comprising the steps of identifying and entering into memory information for each subsection comprising:

a. The Y-coordinate specifying the subsection base line;

b. The X-coordinate specifying the left side of the subsection base line.

c. The X-coordinate specify:ng the right side of the subsection base line.

d. A weighting factor indicating whether, at an arbitrarily specified output device resolution and output point size, said subsection is to be included in the rendering list for said character.

e. At least one status bit indicating whether said subsection is the first subsection of a section member.

12. A method of storing in a computer memory vertical multiresolution trapezoid character representations generated in accordance with claim 4, comprising the steps of identifying and entering into memory information for each subsection comprising:

a. The X-coordinate specifying the subsection base line;

b. The Y-coordinate specifying the top of the subsection base line;

c. The Y-coordinate specifying the bottom side of the subsection base line;

d. A weighting factor indicating whether, at an arbitrarily specified output device resolution and output point size, said subsection is to be included in the rasterization list for said character.

e. At least one status bit indicating whether said subsection is the first subsection of a section member.

13. The method of claim 5 wherein, commencing with the second subsection of a section member, the X and Y coordinates are replaced with values equal to the difference between said X and Y coordinates and the corresponding X and Y coordinates of the prior subsection and further comprising status bits indicating information comprising:

a. Whether the left subsection side is a line or an arc and, if an arc, whether oriented clockwise or counterclockwise;

b. Whether the right subsection side is a line or an arc and, if an arc, whether oriented clockwise or counterclockwise.

c. At least one status bit indicating whether said subsection is the first subsection of a section member.

14. The method of claim 6 wherein, commencing with the second subsection of a section member, the X and Y coordinates are replaced with values equal to the difference between said X and Y coordinates and the corresponding X and Y coordinates of the prior subsection and further comprising status bits indicating information comprising:

a. Whether the top subsection component is a line or an arc and, if an arc, whether oriented clockwise or counterclockwise;

b. Whether the bottom subsection component is a line or an arc and, if an arc, whether oriented clockwise or counterclockwise.

c. At least one status bit indicating whether said subsection is the first subsection of a section member.

15. The method of Claim 7 wherein, commencing with the second subsection of a section member, the X and Y coordinates are replaced with values equal to the difference between said X and Y coordinates and

EP 0 395 021 A2

the corresponding X and Y coordinates of the prior subsection and the radii are replaced with values equal to the difference between said radii and the corresponding radii of the prior subsection and further comprising status bits indicating information comprising:

a. Whether the left subsection component is a line or an arc and, if an arc, whether oriented clockwise or counterclockwise.

b. Whether the right subsection component is a line or an arc and, if an arc, whether oriented clockwise or counterclockwise.

c. At least one status bit indicating whether said subsection is the first subsection of a section member.

16. The method of claim 8 wherein, commencing with the second subsection of a section member, the X and Y coordinates are replaced with values equal to the difference between said X and Y coordinates and the corresponding X and Y coordinates of the prior subsection and the radii are replaced wih values equal to the difference between said radii and the corresponding radii of the prior subsection and further comprising status bits indicating information comprising:

a. Whether the top subsection component is a line or an arc and, if an arc, whether oriented clockwise or counterclockwise:

b. Whether the bottom subsection component is a line or an arc and, if an arc, whether oriented clockwise or counterclockwise;

c. At least one status bit indicating whether said subsection is the first subsection of a section member.

17. The method of claim 9 wherein, commencing with the second subsection of a section member, the X and Y coordinates are replaced with values equal to the difference between said X and Y coordinates and the corresponding X and Y coordinates of the prior subsection and the chord ratios are replaced with values equal to the difference between said chord ratios and the corresponding chord ratios of the previous subsection and further comprising status bits indicating information comprising:

a. Whether the left subsection component is a line or an arc and, if an arc, whether oriented clockwise or counterclockwise;

b. Whether the right subsection component is a line or an arc and, if an arc, whether oriented clockwise or counterclockwise.

c. At least one status bit indicating whether said subsection is the first subsection of a section member.

18. The method of claim 10 wherein, commencing with the second subsection of a section member, the X and Y coordinates are replaced with values equal to the difference between said X and Y coordinates and the corresponding X and Y coordinates of the prior subsection and the chord ratios are replaced with values equal to the difference between said chord ratios and the corresponding chord ratios of the previous subsection and further comprising status bits indicating information comprising:

a. Whether the top subsection component is a line or an arc and, if an arc, whether oriented clockwise or counterclockwise;

b. Whether the bottom subsection component is a line or an arc and, if an arc, whether oriented clockwise or counterclockwise.

c. At least one status bit indicating whether said subsection is the first subsection of a section member.

19. The method in accordance with one of the claims 13, 14, 15, 16, 17 or 18 further comprising status bits indicating the number of bytes needed to store the difference between said X and Y coordinates.

20. The method of claim 11 or 12 wherein, commencing with the second subsection of a section member, the X and Y coordinates are replaced with values equal to the difference between said X and Y coordinates and the corresponding X and Y coordinates of the prior subsection.

21. The method of claim 11 or 20 further comprising status bits indicating information comprising the number of bytes needed to store the difference between said X and Y coordinates, and the number of bytes needed to store all status information.

22. A system for retrieving character information stored in accordance with one of the claims 1-4, said system comprising:

a. Means for sequentially retrieving data representing said characters from system memory.

b. Means for decoding, selecting and retaining said data in temporary storage pending sequential transfer to character generation means.

c. Means for generating data adequate to drive a raster line display or a printer display.

15

FIG. 1

FIG. 2

FIG. 3

FIG. 4

FIG. 5

FIG. 6

CURVEZOID `n´+ 2´

38

37

CURVEZOID `n´+1´

39

CURVEZOID `n´

36

FIG. 7

START

GET CHARACTER DATA FROM STORE

SET UP SECTION COUNTER

SET UP SECTION MEMBER COUNTER

SET UP SUBSECTION COUNTER

FIRST
SUBSECTION
?
YES

NO

USE CURRENT & PREVIOUS DATA
TRANSFORM COORDINATES
RASTERIZE SIDES
GENERATE SPAN FILLS

SAVE CURRENT DATA

NO
ALL
SUBSECTIONS
DONE
?
YES

NO
ALL
MEMBERS
DONE
?
YES

NO
ALL
SECTIONS
DONE
?
YES

DONE

FIG. 8

START ——— GET CHARACTER DATA FROM STORE

GRID ALIGN THE OUTLINE
PREPARATORY TO RENDERING

SET UP SECTION COUNTER

SET UP SECTION MEMBER COUNTER

SET UP SUBSECTION COUNTER

CHECK RENDERING FACTOR — SKIP

DO

FIRST SUBSECTION ? — YES

NO

USE CURRENT & PREVIOUS DATA
TRANSFORM COORDINATES
RASTERIZE SIDES
GENERATE SPAN FILLS

SAVE CURRENT DATA

ALL SUBSECTIONS DONE ? — NO

YES

ALL MEMBERS DONE ? — NO

YES

FIG. 9

ALL SECTIONS DONE ? — NO

YES

DONE

FIG. 10